(19) Europäisches Patentamt / European Patent Office / Office européen des brevets

(11) **EP 4 756 902 A1**

(12) **EUROPEAN PATENT APPLICATION**
published in accordance with Art. 153(4) EPC

(43) Date of publication:
**10.06.2026 Bulletin 2026/24**

(21) Application number: **25768688.1**

(22) Date of filing: **04.03.2025**

(51) International Patent Classification (IPC):
$H01M\ 4/134^{(2010.01)}$    $H01M\ 4/38^{(2006.01)}$
$H01M\ 4/1395^{(2010.01)}$    $H01M\ 4/04^{(2006.01)}$
$H01M\ 10/052^{(2010.01)}$    $H01M\ 10/058^{(2010.01)}$
$H01M\ 4/02^{(2006.01)}$

(52) Cooperative Patent Classification (CPC):
H01M 4/02; H01M 4/04; H01M 4/134;
H01M 4/1395; H01M 4/38; H01M 10/052;
H01M 10/058; Y02E 60/10

(86) International application number:
**PCT/KR2025/099519**

(87) International publication number:
**WO 2025/188133 (11.09.2025 Gazette 2025/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.03.2024 KR 20240030609**

(71) Applicant: **LG Energy Solution, Ltd.
Seoul 07335 (KR)**

(72) Inventors:
- **JUN, Chan Soo
  Daejeon 34122 (KR)**
- **KWON, Yohan
  Daejeon 34122 (KR)**
- **PARK, Su Jin
  Daejeon 34122 (KR)**
- **LEE, Jaewook
  Daejeon 34122 (KR)**

(74) Representative: **BCKIP Part mbB
Landsberger Straße 98
80339 München (DE)**

(54) **ANODE FOR LITHIUM SECONDARY BATTERY, METHOD FOR MANUFACTURING LITHIUM SECONDARY BATTERY, AND LITHIUM SECONDARY BATTERY COMPRISING ANODE**

(57) The present application relates to a negative electrode for a lithium secondary battery, a method for manufacturing a lithium secondary battery, and a lithium secondary battery including a negative electrode.

[Figure 1]

Processed by Luminess, 75001 PARIS (FR)

**Description**

[Technical Field]

This application claims priority to and the benefit of Korean Patent Application No. 10-2024-0030609 filed in the Korean Intellectual Property Office on March 4, 2024, the entire contents of which are incorporated herein by reference.
The present application relates to a negative electrode for a lithium secondary battery, a method for manufacturing a lithium secondary battery, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.
At present, a secondary battery is a representative example of an electrochemical device that uses such electrochemical energy, and the specified range of use thereof tends to be gradually expanding.
Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.
In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.
In particular, in response to the demand for high-density energy batteries in recent years, researches are being actively conducted on a method for increasing a capacity by using a silicon-based compound such as Si/C or $SiO_x$ having a capacity 10-fold or higher than that of a graphite-based material, in combination as a negative electrode active material. When compared with graphite that is typically used, however, the silicon-based compound that is a high-capacity material is excellent in capacity characteristic itself, but undergoes rapid volume expansion during a charging process to disconnect a conductive path, resulting in deterioration in battery characteristics, and accordingly, the capacity decreases from the initial stage. In addition, for a silicon-based negative electrode, when the charging and discharging cycle is repeated, lithium ions are not uniformly charged in the depth direction of the negative electrode and reactions proceed on the surface, resulting in accelerated surface degradation. Therefore, the performance needs to be improved in terms of battery cycle.
Therefore, in order to solve the problem that occurs when a silicon-based compound is used as a negative electrode active material, a variety of methods are discussed, such as a method of controlling a drive potential, a method of additionally coating a thin film on an active material layer, a method of suppressing volume expansion itself such as a method of controlling a particle diameter of a silicon-based compound or a development of a binder capable of suppressing volume expansion of a silicon-based compound to prevent disconnection of a conductive path. In addition, research is being conducted to supplement the life characteristics of the silicon-based negative electrode by limiting a proportion of the silicon-based active material used during initial charging and discharging by a method of pre-lithiating the silicon-based active material layer, and imparting a reservoir role.
However, since the above methods may make the performance of the battery rather deteriorate, there is a limitation in application, so that there is still a limitation in commercialization of manufacturing a negative electrode battery having a high content of a silicon-based compound. In addition, as the proportion of the silicon-based active material included in the silicon-based active material layer increases, pre-lithiation is concentrated on the surface of the negative electrode, so that the silicon-based active material on the surface is rather damaged, and as non-uniform pre-lithiation occurs, a problem with the improvement of life characteristics occurs.
Accordingly, in a structure where the negative electrode active material layer is applied as a double layer (DLD), research is being conducted to change a composition included in an upper layer portion. However, when only a silicon-based material such as $SiO_x$ is used in the upper layer portion, the life performance is still not secured due to the reaction concentrated on the surface. In this regard, when a carbon-based active material is used in combination, the thickness is increased to achieve the same capacity, resulting in deterioration of rapid charging performance.
Therefore, there is a need for research on a negative electrode that, even when a silicon-based compound is used as an active material, can prevent electrode surface degradation during charging and discharging cycles, secure rapid charging performance, and improve uniformity during pre-lithiation, thereby enhancing both the capacity characteristics and cycle performance of lithium secondary batteries.

Prior Art Document

(Patent Literature 1) Japanese Patent Application Publication No. 2009-080971

[Detailed Description of the Invention]

[Technical Problem]

The inventors of the present application have found that when a silicon-based active material is used in the negative electrode and a silicon-based active material with controlled crystal grain size is used in the second negative electrode active material layer, a negative electrode for a lithium secondary battery can be provided which can maximize capacity characteristics while preventing electrode surface degradation, which is a problem in the related art, during charging and discharging cycles, and furthermore, secure rapid charging performance.

Accordingly, the present application relates to a negative electrode for a lithium secondary battery, a method for manufacturing a lithium secondary battery, and a lithium secondary battery including a negative electrode.

[Technical Solution]

An exemplary embodiment of the present specification provides a negative electrode for a lithium secondary battery, including: a negative electrode current collector layer; a first negative electrode active material layer provided on one surface or both surfaces of the negative electrode current collector layer; and a second negative electrode active material layer provided on a surface of the first negative electrode active material layer opposite to a surface facing the negative electrode current collector layer, in which the first negative electrode active material layer includes a first negative electrode active material layer composition including a first negative electrode active material, the second negative electrode active material layer includes a second negative electrode active material layer composition including a second negative electrode active material, the first negative electrode active material includes one or more selected from the group consisting of Si and $SiO_x$ (0 < x <2), and includes 95 parts by weight or more of Si based on 100 parts by weight of the first negative electrode active material, the second negative electrode active material includes a silicon-based active material, and the silicon-based active material has a crystal grain size of 250 nm or less.

Another exemplary embodiment provides a method for manufacturing a lithium secondary battery, including: preparing a negative electrode for a lithium secondary battery; and assembling the negative electrode for a lithium secondary battery, a positive electrode, a separator, and an electrolyte, in which the preparing the negative electrode for a lithium secondary battery includes: preparing a negative electrode current collector layer, applying a first negative electrode active material layer composition to one surface or both surfaces of the negative electrode current collector layer to form a first negative electrode active material layer, and forming a second negative electrode active material layer on the first negative electrode active material layer, wherein the first negative electrode active material layer includes a first negative electrode active material layer composition including a first negative electrode active material, the second negative electrode active material layer includes a second negative electrode active material layer composition including a second negative electrode active material, the first negative electrode active material includes one or more selected from the group consisting of Si and $SiO_x$ (0 < x < 2), and includes 95 parts by weight or more of Si based on 100 parts by weight of the first negative electrode active material, the second negative electrode active material includes a silicon-based active material, and the silicon-based active material has a crystal grain size of 250 nm or less.

Finally, there is provided a lithium secondary battery including a positive electrode; the negative electrode for a lithium secondary battery according to the present application; a separator provided between the positive electrode and the negative electrode; and an electrolyte.

[Advantageous Effects]

The negative electrode for a lithium secondary battery according to an exemplary embodiment of the present invention has a double-layered active material layer composed of the first negative electrode active material layer and the second negative electrode active material layer. In particular, the first negative electrode active material included in the first negative electrode active material layer includes one or more selected from the group consisting of Si and $SiO_x$ (0 < x < 2), and includes 95 parts by weight or more of Si based on 100 parts by weight of the first negative electrode active material, the second negative electrode active material includes a silicon-based active material, and the silicon-based active material has a crystal grain size of 250 nm or less.

The silicon-based active material with a crystal grain size controlled as described above is used in the second negative electrode active material layer, thereby enabling the crystal grain boundaries to be widely distributed. This allows lithium ions to be more uniformly distributed upon intercalation, which reduces the stress generated during intercalation of lithium ions into silicon particles and alleviates particle breakage on the surface. As a result, the life stability of the negative electrode can be further improved.

The negative electrode for a lithium secondary battery according to the present application has a double-layer active material layer having the specific composition and content as described above, and in particular, the first negative electrode active material layer includes a high content of Si, allowing the advantages of high capacity, high density, and rapid charging to be retained as they are. Furthermore, the silicon-based active material is used as the second negative electrode active material, thereby securing features of rapid charging performance and high-energy density, compared to negative electrodes in which a carbon-based active material or a combination of carbon-based and silicon-based active materials is used as the second negative electrode active material.

That is, in order to secure rapid charging performance, a high content of the silicon-based active material should be included in both the first negative electrode active material layer and the second negative electrode active material layer. However, simply increasing the content of the silicon-based active material leads to a rapid decrease in life performance. In this regard, a silicon-based active material with a crystal grain size of 250 nm or less is included in the second negative electrode active material layer, thereby controlling the reaction concentration on the surface and improving the life performance.

In addition, when controlled in this way, capacity characteristics are satisfied, which enables the first negative electrode active material layer and the second negative electrode active material layer to be formed with small thicknesses, thereby ensuring rapid charging performance.

Like this, the negative electrode for a lithium secondary battery according to the present application is characterized by controlling the composition and crystal grain size included in the negative electrode active material layers (first and second) in order to take advantage of an electrode in which a high content of Si particles is used as a single-layer active material, while simultaneously solving problems of surface degradation, uniformity during pre-lithiation, and life characteristics, which are disadvantages that arise when such an electrode is used.

[Brief Description of Drawings]

FIG. 1 is a view showing a stack structure of a negative electrode for a lithium secondary battery according to an exemplary embodiment of the present application.

FIG. 2 is a view showing a stack structure of a negative electrode for a lithium secondary battery according to an exemplary embodiment of the present application.

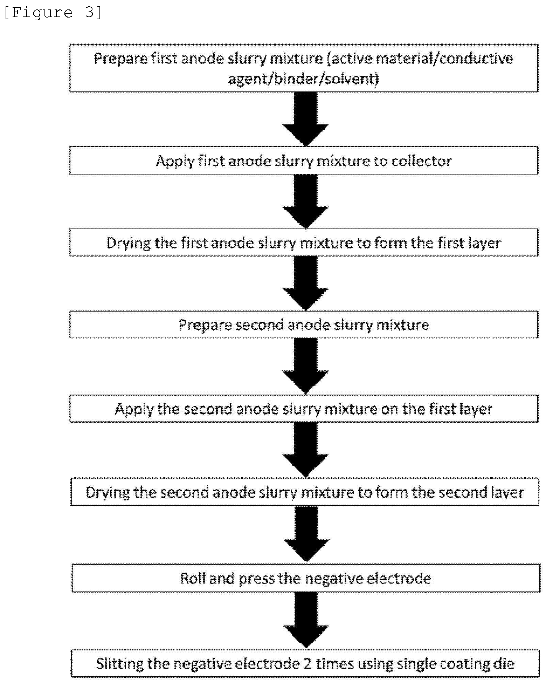

FIG. 3 is a flowchart showing a wet-on-dry process according to an exemplary embodiment of the present application.

FIG. 4 is a flowchart showing a wet-on-wet process according to an exemplary embodiment of the present application.

FIG. 5 is an enlarged view of a silicon-based active material according to an exemplary embodiment of the present application.

<Explanation of Reference Numerals and Symbols>

10: second negative electrode active material layer
20: first negative electrode active material layer
30: negative electrode current collector layer

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter, center particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the particle diameter distribution may be measured using a laser diffraction method. Specifically, the powder to be measured is dispersed in a dispersion medium and then introduced into a commercially available laser diffraction particle diameter measuring apparatus (e.g., Microtrac S3500), where a difference in diffraction patterns according to particle size is measured as the particles pass through the laser beam, thereby calculating the particle diameter distribution.

In the present specification, the description "a polymer includes a certain monomer as a monomer unit" means that the monomer participates in a polymerization reaction and is included as a repeating unit in the polymer. In the present specification, when a polymer includes a monomer, this is interpreted to be the same as when the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, the molecular weight refers to a weight average molecular weight unless particularly described otherwise.

Hereinafter, exemplary embodiments of the present invention will be described in detail with reference to the drawings so that one skilled in the art can readily implement the present invention. However, the present invention may be implemented in various different forms, and is not limited to the following descriptions.

An exemplary embodiment of the present specification provides a negative electrode for a lithium secondary battery, including: a negative electrode current collector layer; a first negative electrode active material layer provided on one surface or both surfaces of the negative electrode current collector layer; and a second negative electrode active material layer provided on a surface of the first negative electrode active material layer opposite to a surface facing the negative electrode current collector layer, in which the first negative electrode active material layer includes a first negative electrode active material layer composition including a first negative electrode active material, the second negative electrode active material layer includes a second negative electrode active material layer composition including a second negative electrode active material, the first negative electrode active material includes one or more selected from the group consisting of Si and $SiO_x$ ($0 < x < 2$), and includes 95 parts by weight or more of Si based on 100 parts by weight of the first negative electrode active material, the second negative electrode active material includes a silicon-based active material, and the silicon-based active material has a crystal grain size of 250 nm or less.

That is, in order to secure rapid charging performance, a high content of the silicon-based active material should be included in both the first negative electrode active material layer and the second negative electrode active material layer. However, simply increasing the content of the silicon-based active material leads to a rapid decrease in life performance. In this regard, according to the present application, a silicon-based active material with a crystal grain size of 250 nm or less is included in the second negative electrode active material layer, thereby controlling the reaction concentration on the surface and improving the life performance.

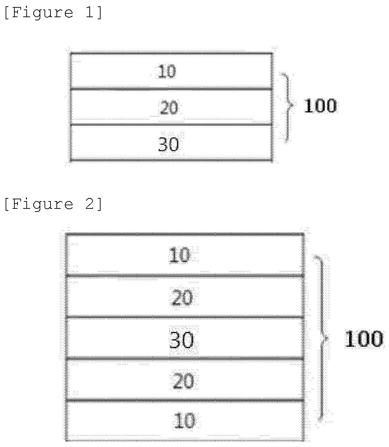

FIG. 1 is a view showing a stack structure of a negative electrode for a lithium secondary battery according to an exemplary embodiment of the present application. Specifically, a negative electrode 100 for a lithium secondary battery can be seen which includes a first negative electrode active material layer 20 and a second negative electrode active material layer 10 on one surface of a negative electrode current collector layer 30. FIG. 1 shows that the first negative electrode active material layer is formed on one surface, but the first negative electrode active material layer may be formed on both surfaces of the negative electrode current collector layer. As described above, in an exemplary embodiment of the present application, the first negative electrode active material layer may be formed on an entire surface of the negative electrode current collector layer, and the second negative electrode active material layer may be formed on an entire surface of the first negative electrode active material layer.

In addition, FIG. 2 is a view showing a stack structure of a negative electrode for a lithium secondary battery according to an exemplary embodiment of the present application. Specifically, as shown in FIG. 2, a first negative electrode active material layer 20 and a second negative electrode active material layer 30 may be formed on both surfaces of a negative electrode current collector layer 30. In addition, an arrangement of 10>20>30>20>10 is possible, and furthermore, when the first negative electrode active material layer and the second negative electrode active material layer are sequentially stacked on only one surface of the negative electrode current collector layer, such as 10>20>30>20, 10>20>30>10, 10>20>30>10>20, or the like, the negative electrode active material layers may be stacked in an arbitrary arrangement on the opposite surface. Preferably, both surfaces of the negative electrode current collector layer have the same composition, and specifically may have a structure of 10>20>30>20>10.

Below, the negative electrode for a lithium secondary battery of the present invention will be described in more detail.

In an exemplary embodiment of the present application, there is provided a negative electrode for a lithium secondary battery including: a negative electrode current collector layer; a first negative electrode active material layer provided on one surface or both surfaces of the negative electrode current collector layer; and a second negative electrode active material layer provided on a surface opposite to a surface of the first negative electrode active material layer in contact with the negative electrode current collector layer.

In an exemplary embodiment of the present application, the negative electrode current collector layer generally has a thickness of 1 μm to 100 μm. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, a thickness of the negative electrode current collector layer may be 1 μm or more and 100 μm or less.

However, the thickness may be variously modified depending on a type and a use of negative electrode used, and is not limited thereto.

In an exemplary embodiment of the present application, the first negative electrode active material may include one or more selected from the group consisting of Si and $SiO_x$ (0 < x < 2), and may include 95 parts by weight or more of Si based on 100 parts by weight of the first negative electrode active material.

In an exemplary embodiment of the present application, the first negative electrode active material includes one or more selected from the group consisting of Si and $SiO_x$ (0 < x < 2), and may include 95 parts by weight or more, preferably 97 parts by weight or more, and more preferably 99 parts by weight or more of Si and 100 parts by weight or less of Si based on 100 parts by weight of the first negative electrode active material.

In an exemplary embodiment of the present application, pure silicon (Si) particles may be particularly used as the first negative electrode active material. Using pure silicon (Si) as the first negative electrode active material may mean that, based on 100 parts by weight of the total first negative electrode active material as described above, pure Si particles ($SiO_x$ (x=0), Si) that are not combined with other particles or elements are included within the specific range.

In an exemplary embodiment of the present application, the first negative electrode active material may be made of Si.

The first negative electrode active material layer according to the present application includes a first negative electrode active material, specifically, pure silicon particles including 95 parts by weight or more of Si. When a high content of pure silicon particles is included, the capacity characteristics are excellent, but the life characteristics are degraded due to a non-uniform reaction on a surface. Accordingly, the second negative electrode active material layer according to the present invention is included at a specific weight loading amount, thereby solving the above-described problems.

Note that an average particle diameter (D50) of the first negative electrode active material of the present invention may be 3 μm to 10 μm, specifically 4 μm to 8 μm, and more specifically 5 μm to 7 μm. When the average particle diameter falls within the specific range, a specific surface area of the particles falls within a suitable range, resulting in formation of the viscosity of the negative electrode slurry within an appropriate range. Accordingly, particles constituting the negative electrode slurry are smoothly dispersed. In addition, when the size of the first negative electrode active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. Note that, when the average particle diameter falls within the specific range, excessively large silicon particles are excluded, resulting in formation of a smooth surface of the negative electrode. Accordingly, a phenomenon of current density non-uniformity during charging and discharging can be prevented.

In an exemplary embodiment of the present application, the first negative electrode active material generally has a characteristic BET specific surface area. The BET specific surface area of the first negative electrode active material is preferably 0.01 m²/g to 150.0 m²/g, more preferably 0.1 m²/g to 100.0 m²/g, particularly preferably 0.2 m²/g to 80.0 m²/g, and most preferably 0.2 m²/g to 18.0 m²/g. The BET surface area is measured in accordance with DIN 66131 (using nitrogen).

In an exemplary embodiment of the present application, the first negative electrode active material may be present, for example, in a crystalline or amorphous form, and is preferably not porous. The silicon particles are preferably spherical or fragment-shaped particles. Alternatively, but less preferably, the silicon particles may also have a fiber structure or may be present in the form of a silicon-containing film or coating.

In an exemplary embodiment of the present application, the first negative electrode active material may have a non-spherical shape and its sphericity (circularity) is, for example, 0.9 or less, for example, 0.7 to 0.9, for example 0.8 to 0.9, and for example 0.85 to 0.9.

In the present application, the circularity is determined by Formula A-1 below, in which A is an area and P is a boundary line.

$$[\text{Formula A-1}]$$

$$4\pi A/P^2$$

In an exemplary embodiment of the present application, there is provided the negative electrode for a lithium secondary battery in which the first negative electrode active material is included in an amount of 80 parts by weight or more on the basis of 100 parts by weight of the first negative electrode active material layer composition.

In another exemplary embodiment, the first negative electrode active material may be included in an amount of 82 parts by weight or more, preferably 85 parts by weight or more, and more preferably 87 parts by weight or more, and 95 parts by weight or less, preferably 95 parts by weight or less, and more preferably 93 parts by weight or less on the basis of 100 parts by weight of the first negative electrode active material layer composition.

Although the first negative electrode active material layer composition according to the present application uses the first negative electrode active material with a significantly high capacity within the above range, the first negative electrode active material layer composition is also used with a second negative electrode active material layer described below, thereby solving the problems of surface degradation during charging and discharging, uniformity during pre-lithiation, and life characteristics without lowering the overall capacity performance of the negative electrode.

In particular, by increasing an amount of the active material included in the first negative electrode active material layer as described above and reducing an amount of the first negative electrode conductive material described below, the first negative electrode active material layer itself can be formed with a thin thickness, thereby ensuring rapid charging performance.

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Accordingly, in an exemplary embodiment of the present application, the first negative electrode active material layer composition may further include one or more selected from the group consisting of a first negative electrode conductive material, and a first negative electrode binder.

In this case, as the first negative electrode conductive material and the first negative electrode binder included in the first negative electrode active material layer composition, those used in the art may be used without limitation.

In an exemplary embodiment of the present application, as the first negative electrode conductive material, materials that can be generally used in the art may be used without limitation, and specifically, one or more selected from the group consisting of a point-like conductive material, a planar conductive material; and a linear conductive material may be included.

In an exemplary embodiment of the present application, the point-like conductive material refers to a conductive material that may be used for improving conductivity of the negative electrode, has conductivity without causing a chemical change and has a point-like or spherical shape. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or more and 70 $m^2$/g or less, preferably 45 $m^2$/g or more and 65 $m^2$/g or less, and more preferably 50 $m^2$/g or more and 60 $m^2$/g or less.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the first negative electrode conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, an average particle diameter (D50) of the planar conductive material may be 2 to 7 $\mu$m, specifically 3 to 6 $\mu$m, and more specifically 4 to 5 $\mu$m. When the specified range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present application, there is provided the negative electrode composition in which the planar conductive material has a D10 of 0.5 $\mu$m or more and 1.5 $\mu$m or less, a D50 of 2.5 $\mu$m or more and 3.5 $\mu$m or less, and a D90 of 7.0 $\mu$m or more and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m$^2$/g or more.

In another exemplary embodiment, the planar conductive material may have a BET specific surface area of 5 m$^2$/g or more and 500 m$^2$/g or less, preferably 5 m$^2$/g or more and 300 m$^2$/g or less, and more preferably 5 m$^2$/g or more and 250 m$^2$/g or less.

In another exemplary embodiment, the planar conductive material is a planar conductive material with a high specific surface area, and the BET specific surface area may fall within a range of 50 m$^2$/g or more and 500 m$^2$/g or less, preferably 80 m$^2$/g or more and 300 m$^2$/g or less, and more preferably 100 m$^2$/g or more and 300 m$^2$/g or less.

In another exemplary embodiment, the planar conductive material is a planar conductive material with a low specific surface area, and the BET specific surface area may fall within a range of 5 m$^2$/g or more and 40 m$^2$/g or less, preferably 5 m$^2$/g or more and 30 m$^2$/g or less, and more preferably 5 m$^2$/g or more and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the first negative electrode conductive material may fall within a range of 0.1 part by weight or more and 5 parts by weight or less, on the basis of 100 parts by weight of the first negative electrode active material layer composition.

In another exemplary embodiment, the first negative electrode conductive material may include 0.1 part by weight or more and 5 parts by weight or less, preferably 0.3 part by weight or more and 3 parts by weight or less, and more preferably 0.5 part by weight or more and 1 part by weight or less, based on 100 parts by weight of the first negative electrode active material layer composition.

In an exemplary embodiment of the present application, the first negative electrode conductive material may solely include a linear conductive material.

That is, the first negative electrode active material layer according to the present application includes a high content of the first negative electrode active material as an optimal content to secure capacity characteristics and rapid charging, while reducing the amount of the first negative electrode conductive material. Furthermore, it includes a linear conductive material, which is capable of securing a long-distance conductive network, within the specific parts by weight range to secure a conductive network.

In an exemplary embodiment of the present application, as the first negative electrode conductive material satisfies the composition and ratio described above, the first negative electrode conductive material has a feature in which output characteristics at a high C-rate are excellent because the life characteristics of the existing lithium secondary battery are not greatly affected and the number of points where the battery can be charged and discharged is increased.

The first negative electrode conductive material according to the present application has a completely different configuration from a conductive material that is applied to the positive electrode. That is, the first negative electrode conductive material according to the present application serves to hold contacts between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the first negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the first negative electrode conductive material that is applied together with the silicon-based active material as in the present invention, in terms of configuration and role.

In an exemplary embodiment of the present application, the first negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The first negative electrode binder according to an exemplary embodiment of the present application serves to hold the first negative electrode active material and the first negative electrode conductive material in order to prevent distortion and structural deformation of the negative electrode structure in volume expansion and relaxation of the first negative electrode active material. When such roles are satisfied, all of the general binders can be applied. Specifically, an aqueous binder may be used, and more specifically, a PAM-based binder may be used.

In an exemplary embodiment of the present application, the first negative electrode binder may be included in an amount of 30 parts by weight or less, preferably 25 parts by weight or less, and more preferably 10 parts by weight or less, and 1 parts by weight or more and 3 parts by weight or more on the basis of 100 parts by weight of the first negative electrode active material layer composition.

Compared to existing carbon-based negative electrodes, when a silicon-based active material is used in a negative electrode, the aqueous binder is applied within the specific parts by weight range to control volume expansion and secure life performance.

In the present application, there is provided the negative electrode for a lithium secondary battery in which the second negative electrode active material includes a silicon-based active material, and the silicon-based active material has a crystal grain size of 250 nm or less.

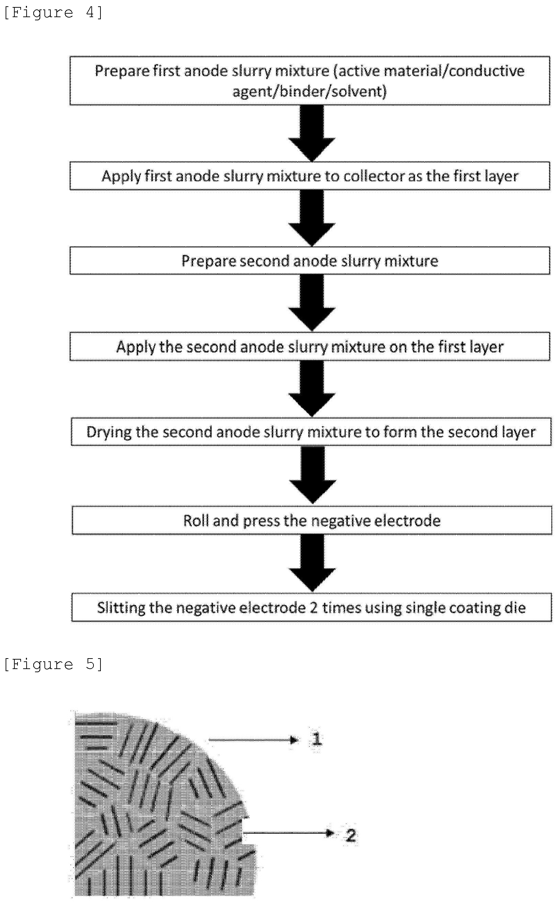

FIG. 5 is an enlarged view of a silicon-based active material according to an exemplary embodiment of the present application. Specifically, the silicon-based active material 1 is composed of a plurality of crystal structures 2, and in this case, it can be confirmed that the crystal structure has a crystal grain distribution of 1 nm or more and 250 nm or less. In addition, a space between crystal structures may be defined as a crystal grain boundary. Also, in general, the crystal structure can be expressed as crystal grains.

The silicon-based active material with a crystal grain size controlled as described above is used in the second negative electrode active material layer, thereby enabling the crystal grain boundaries to be widely distributed. This allows lithium ions to be more uniformly distributed upon intercalation, which reduces the stress generated during intercalation of lithium ions into silicon particles and alleviates particle breakage on the surface. As a result, the life stability of the negative electrode can be further improved.

FIG. 1 is an enlarged view of a silicon-based active material according to an exemplary embodiment of the present application. Specifically, the silicon-based active material 1 is composed of a plurality of crystal structures 2, and in this case, it can be confirmed that the crystal structure has a crystal grain distribution of 1 nm or more and 250 nm or less. In addition, a space between crystal structures may be defined as a crystal grain boundary. Also, in general, the crystal structure can be expressed as crystal grains.

In an exemplary embodiment of the present application, the crystal grain size of the silicon-based active material may be 250 nm or less.

In another exemplary embodiment, the crystal grain size of the silicon-based active material may be 250 nm or less, preferably 240 nm or less, more preferably 230 nm or less, still more preferably 225 nm or less, and specifically 220 nm or less. The crystal grain size of the silicon-based active material may have a range of 1 nm or more, preferably 2 nm or more, and more specifically 3 nm or more.

The silicon-based active material has the above crystal grain size, and falls within the specific range, thereby enabling crystal grain boundaries to be widely distributed. Consequently, when lithium ions are intercalated, they are uniformly intercalated, thereby reducing the stress applied to the silicon particles during the intercalation of lithium ions, and thus alleviating particle breakage. As a result, characteristics capable of improving the life stability of the negative electrode are obtained. If the crystal grain size exceeds the above range, the crystal grain boundaries within the particles are narrowly distributed, and in this case, lithium ions are non-uniformly intercalated into the particles, leading to large stress during the intercalating of ions, and accordingly, breakage of particles.

In an exemplary embodiment of the present application, there is provided the negative electrode active material in which the silicon-based active material includes a crystal structure having a crystal grain distribution of 1 nm or more and 200 nm or less, and an area ratio of the crystal structure based on a total area of the silicon-based active material is 5% or less.

In another exemplary embodiment, the area ratio of the crystal structure based on the total area of the silicon-based active material may be 5% or less, or 3% or less, and 0.1% or more.

That is, the silicon-based active material according to the present application has a crystal grain size of 200 nm or less, is formed so that the size of one crystal structure is small, and may satisfy the above area ratio. Accordingly, the distribution of the crystal grain boundaries may be widened, and accordingly, the above-described effects may be exhibited.

In an exemplary embodiment of the present application, there is provided the negative electrode active material in which the number of the crystal structures included in the silicon-based active material is 20 or more.

The number of the crystal structures included in the silicon-based active material may mean the number of each crystal structure in FIG. 1. That is, the silicon-based active material itself may be composed of a plurality of crystal structures, and in this case, the number of the crystal structures may be 20 or more.

In another exemplary embodiment, the number of crystal structures included in the silicon-based active material may fall within a range of 20 or more, 30 or more, or 35 or more, and 60 or less or 50 or less.

That is, as described above, when the crystal grain size of the silicon-based active material falls within the above range and the number of crystal structures falls within the above range, the silicon-based active material itself has strength within an appropriate range. Therefore, when such a silicon-based active material is included in an electrode, flexibility can be imparted, and volume expansion can be effectively suppressed.

In the present application, the crystal grain refers to a crystal particle in a metal or material, which is a collection of microscopically irregular shapes, and the crystal grain size may refer to a diameter of the observed crystal grain particle. That is, in the present application, the crystal grain size means a size of a domain sharing the same crystal direction in a particle, and has a different concept from a particle size or a size of a particle diameter expressing a size of a material.

In an exemplary embodiment of the present application, the crystal grain size may be calculated as a value of full width at half maximum (FWHM) through XRD analysis. The remaining values except L are measured through XRD analysis of the silicon-based active material, and the crystal grain size can be measured through the Debey-Scherrer equation showing that the FWHM and the crystal grain size are in inverse ratio. The Debey-Scherrer equation is as shown in Formula 1-1 below.

$$[\text{Formula } 1\text{-}1]$$

$$FWHM = (K\lambda)/(LCOS\theta)$$

In Formula 1-1 above, L is a crystal grain size, K is a constant, $\theta$ is a Bragg angle, and $\lambda$ is a wavelength of X-ray.

In addition, the shapes of the crystal grains are diverse and can be measured in three dimensions. In general, the size of the crystal grain can be measured by a generally used circle method or diameter measurement method, but no such limitation is intended.

In the diameter measurement method, the size of the crystal grain can be measured by drawing 5 to 10 parallel lines each having a length of L mm on a micrograph of a target particle, counting the number of crystal grains z on each line, and averaging them. In this case, only crystal grains that are wholly included on the line are counted, and crystal grains that are partially put on (laid across) the line are excluded. When the number of lines is P and the magnification is V, the average particle diameter can be calculated by Formula 1-2 below.

$$[\text{Formula } 1\text{-}2]$$

$$Dm = (L*P*10^3)/(zV) \ (um)$$

In addition, the circle method is a method in which a circle with a predetermined diameter is drawn on a micrograph of a target particle, and then an average area of crystal grains is calculated by the number of crystal grains in the circle and the number of crystal grains laid across the boundary line, and the average area can be calculated by Equation 1-3 below.

[Formula 1-3]

$$Fm = (Fk * 10^6)/((0.67n + z) V^2) (um^2)$$

In Formula 1-3, Fm is an average particle area, Fk is a measurement area on the photograph, z is the number of particles within a circle, n is the number of particles laid across the circle, and V is a magnification of a microscope.

Note that an average particle diameter (D50 particle size) of the silicon-based active material of the present invention may be 1 μm or more and 10 μm or less, specifically 2 μm to 8 μm, and more specifically 3 μm to 8 μm. When the average particle diameter falls within the specific range, a specific surface area of the particles falls within a suitable range, resulting in formation of the viscosity of the negative electrode slurry within an appropriate range. Accordingly, particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, resulting in an increase in the capacity retention rate. Note that, when the average particle diameter falls within the specific range, excessively large silicon particles are excluded, resulting in formation of a smooth surface of the negative electrode. Accordingly, a phenomenon of current density non-uniformity during charging and discharging can be prevented.

In particular, the negative electrode active material according to the present application is characterized by controlling the average particle diameter (D50) and crystal grain size of the silicon-based active material. In general, it is known that when a silicon-based active material having a large average particle diameter is used, it is easy to secure a path for lithium ions. However, as the average particle diameter increases, the adhesive strength with the contact surface decreases, leading to a rapid deterioration in life characteristics. Accordingly, when an active material including a silicon-based active material with a small average particle diameter (D50) is simply applied, life performance is secured, but it is difficult to secure a pathway for lithium ions, resulting in an increase in resistance.

Accordingly, in the present application, the average particle diameter (D50) of the silicon-based active material is controlled to the specific range to secure the life characteristics, and at the same time, the crystal grain size of the silicon-based particles is controlled as described above so that the crystal grain boundaries are widely distributed. Consequently, when lithium ions are intercalated, they are uniformly intercalated, thereby reducing the stress applied to the silicon particles during the intercalation of lithium ions, and thus alleviating particle breakage. As a result, the life stability of the negative electrode can be further improved.

In an exemplary embodiment of the present application, the silicon-based active material generally has a characteristic BET surface area. The BET surface area of the silicon-based active material is preferably 0.01 to 150 $m^2$/g, more preferably 0.1 to 100 $m^2$/g, particularly preferably 0.2 to 80 $m^2$/g, and most preferably 0.2 to 18 $m^2$/g. The BET surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or fragment-shaped particles. Alternatively, but less preferably, the silicon particles may also have a fiber structure or be present in the form of a silicon-containing film or coating.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity is determined by Formula 1-A below, in which A is an area and P is a boundary line.

[Formula 1-A]

$$4\pi A/P^2$$

In an exemplary embodiment of the present application, the silicon-based active material included in the second negative electrode active material may include one or more selected from the group consisting of Si, $SiO_x$ (0 < x < 2), SiC, and a Si alloy.

In an exemplary embodiment of the present application, the silicon-based active material included in the second negative electrode active material may include one or more selected from the group consisting of Si, $SiO_x$ (0 < x < 2), SiC, and a Si alloy, and may include 1 part by weight or more of Si based on 100 parts by weight of the second negative electrode active material.

In another exemplary embodiment, the silicon-based active material included in the second negative electrode active material may include one or more selected from the group consisting of Si, SiO$_x$ (0 < x < 2), SiC, and a Si alloy, and may include 1 part by weight or more, or 50 parts by weight or more, and 100 parts by weight or less of Si based on 100 parts by weight of the second negative electrode active material.

In another exemplary embodiment, the silicon-based active material included in the second negative electrode active material may include SiO$_x$ (0 < x < 2).

In another exemplary embodiment, the silicon-based active material included in the second negative electrode active material may include Si.

The negative electrode for a lithium secondary battery according to the present application includes the second negative electrode active material in the second negative electrode active material layer as described above. Accordingly, while maintaining the high capacity and high density characteristics by including the above-described first negative electrode active material, the second negative electrode active material serves as a buffer layer, making it possible to address the problem of degradation in surface during charging and discharging, the problem of uniformity during pre-lithiation, and the problem of life characteristics.

In particular, in the second negative electrode active material layer according to the present application, the crystal grain size of the silicon-based active material is controlled, thereby ensuring that it falls within the optimal range for rapid charging while simultaneously solving life performance issues.

In an exemplary embodiment of the present application, there is provided the negative electrode for a lithium secondary battery in which the second negative electrode active material is included in an amount of 60 parts by weight or more on the basis of 100 parts by weight of the second negative electrode active material layer composition.

In another exemplary embodiment, the second negative electrode active material may be included in an amount of 60 parts by weight or more, and 100 parts by weight or less, or 99 parts by weight or less on the basis of 100 parts by weight of the second negative electrode active material layer composition.

The second negative electrode active material layer composition according to the present application has a feature of suppressing a surface reaction of the negative electrode to enhance life characteristics without degrading the capacity performance of the negative electrode by using the second negative electrode active material within the above range, which has lower capacity characteristics but has less particle cracking during charging and discharging than the first negative electrode active material.

In an exemplary embodiment of the present application, there is provided the negative electrode for a lithium secondary battery in which the second negative electrode active material layer composition further includes one or more selected from the group consisting of a second negative electrode conductive material and a second negative electrode binder.

In an exemplary embodiment of the present application, the second negative electrode conductive material may fall within a range of 1 part by weight or more and 40 parts by weight or less, on the basis of 100 parts by weight of the second negative electrode active material layer composition.

In another exemplary embodiment, the second negative electrode conductive material may include 1 part by weight or more and 40 parts by weight or less, preferably 3 parts by weight or more and 30 parts by weight or less, and more preferably 5 parts by weight or more and 25 parts by weight or less, based on 100 parts by weight of the second negative electrode active material layer composition.

In an exemplary embodiment of the present application, the second negative electrode conductive material may include a point-like conductive material, a planar conductive material, and a linear conductive material, and the point-like conductive material, the planar conductive material, and the linear conductive material can satisfy a ratio of 1:1:0.01 to 1:1:1.

In an exemplary embodiment of the present application, the point-like conductive material may fall within a range of 1 part by weight or more and 60 parts by weight or less, preferably 5 parts by weight or more and 50 parts by weight or less, and more preferably 10 parts by weight or more and 50 parts by weight or less, based on 100 parts by weight of the second negative electrode conductive material.

In an exemplary embodiment of the present application, the planar conductive material may fall within a range of 1 part by weight or more and 60 parts by weight or less, preferably 5 parts by weight or more and 50 parts by weight or less, and more preferably 10 parts by weight or more and 50 parts by weight or less, based on 100 parts by weight of the second negative electrode conductive material.

In an exemplary embodiment of the present application, the linear conductive material may fall within a range of 0.01 part by weight or more and 10 parts by weight or less, preferably 0.05 part by weight or more and 8 parts by weight or less, and more preferably 0.1 part by weight or more and 5 parts by weight or less, on the basis of 100 parts by weight of the second negative electrode conductive material.

In an exemplary embodiment of the present application, the second negative electrode conductive material may include a linear conductive material, and a planar conductive material.

In an exemplary embodiment of the present application, the second negative electrode conductive material may include a linear conductive material and a planar conductive material, and a weight ratio of the linear conductive material to the planar conductive material may satisfy 0.01:1 to 0.1:1.

In an exemplary embodiment of the present application, since the second negative electrode conductive material satisfies the above composition and ratio, the life characteristics of existing lithium secondary batteries are not significantly affected, and the output characteristics are excellent at a high C-rate due to the increased number of points where charge and discharge are possible.

In particular, in an exemplary embodiment of the present application, the second negative electrode conductive material may include at least a linear conductive material.

As described above, the second negative electrode active material layer has a porosity within a predetermined range in order to secure rapid charging and life performance. In this case, due to the relatively loose porosity, it is essential that a linear conductive material with a long conductive structure be incorporated into the second negative electrode active material layer in order to secure a conductive path.

The second negative electrode conductive material according to the present application has a completely different composition from a conductive material that is applied to the positive electrode. That is, the second negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the second negative electrode conductive material according to the present application is applied to a silicon-based active material, and has a completely different configuration from that of a conductive material that is applied to a graphite-based active material. That is, the conductive material used for the electrode having a graphite-based active material simply has small particles with respect to the active material, and thus has the characteristics of enhancing output characteristics and imparting partial conductivity, and the composition and role thereof are completely different from those of the second negative electrode conductive material applied together with a silicon-based active material as in the present invention.

In an exemplary embodiment of the present application, the second negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The second negative electrode binder according to an exemplary embodiment of the present application serves to support the first negative electrode active material and the first negative electrode conductive material in order to prevent distortion and structural deformation of the negative electrode structure during the volume expansion and relaxation of the second negative electrode active material. When the above-mentioned role is satisfied, all general binders may be applied, specifically, an aqueous binder may be used, and more specifically, a polyacrylamide (PAM)-based binder may be used.

In an exemplary embodiment of the present application, the second negative electrode binder may include 30 parts by weight or less, preferably 25 parts by weight or less, and more preferably 20 parts by weight or less, and 5 parts by weight or more, or 10 parts by weight or more of the second negative electrode binder based on 100 parts by weight of the second negative electrode active material layer composition.

In an exemplary embodiment of the present application, a thickness of the first negative electrode active material layer may be 10 $\mu$m or more and 25 $\mu$m or less, and a thickness of the second negative electrode active material layer may be 10 $\mu$m or more and 25 $\mu$m or less.

In another exemplary embodiment, the thickness of the second negative electrode active material layer may be 10 $\mu$m or more and 25 $\mu$m or less, specifically, the thickness of the second negative electrode active material layer may be 15 $\mu$m or more and 20 $\mu$m or less.

As described above, the present application can form the thicknesses of the negative electrode active material layers as described above by optimizing the content of the Si-based active material included in each of the negative electrode active material layers. In particular, rapid charging performance can be secured as the thickness of the second negative electrode active material layer falls within the specific range.

In an exemplary embodiment of the present application, a porosity of the first negative electrode active material layer and a porosity of the second negative electrode active material layer may be 20% or more and 50% or less.

In an exemplary embodiment of the present application, there is provided the negative electrode for a lithium secondary battery in which a viscosity of the first negative electrode active material layer composition is a shear viscosity of 2,000 cPs or higher and 15,000 cPs or less at a shear rate of 2.5 (1/s), and a viscosity of the second negative electrode active material layer composition is lower than the viscosity of the first negative electrode active material layer composition.

In another exemplary embodiment, the viscosity of the first negative electrode active material layer composition may satisfy a shear viscosity of 2,000 cPs or higher and 15,000 cPs or less, preferably 2,300 cPs or higher and 14,000 cPs or less, and more preferably 2,500 cPs or higher and 12,000cPs or less at a shear rate of 2.5 (1/s).

In this case, the viscosity of the second negative electrode active material layer composition should be maintained lower than the viscosity of the first negative electrode active material layer composition so that a two-layered negative electrode active material layer can be formed as in the present application. More specifically, the viscosity of the second negative electrode active material layer composition should be lower than but similar to the viscosity of the first negative electrode active material layer composition.

In an exemplary embodiment of the present application, the negative electrode for a lithium secondary battery may be pre-lithiated.

The negative electrode for a lithium secondary battery according to the present application is composed of a double layer, and in particular, the second negative electrode active material layer that satisfies a specific non-uniformity serves as a buffer layer during pre-lithiation, allowing uniform lithiation to occur in an electrode depth direction during charging and discharging cycles.

An exemplary embodiment of the present application provides a method for manufacturing a lithium secondary battery, including the steps of: preparing a negative electrode for a lithium secondary battery; and assembling the negative electrode for a lithium secondary battery, a positive electrode, a separator, and an electrolyte, in which the step of preparing a negative electrode for a lithium secondary battery includes the steps of preparing a negative electrode current collector layer, applying a first negative electrode active material layer composition to one surface or both surfaces of the negative electrode current collector layer to form a first negative electrode active material layer, and forming a second negative electrode active material layer on the first negative electrode active material layer, wherein the first negative electrode active material layer includes a first negative electrode active material layer composition including a first negative electrode active material, the second negative electrode active material layer includes a second negative electrode active material layer composition including a second negative electrode active material, the first negative electrode active material includes one or more selected from the group consisting of Si and $SiO_x$ (0 < x < 2), and includes 95 parts by weight or more of Si based on 100 parts by weight of the first negative electrode active material, the second negative electrode active material includes a silicon-based active material, and the silicon-based active material has a crystal grain size of 250 nm or less.

In the method for manufacturing a negative electrode, the above-described descriptions may be applied to the composition and content included in each step.

In an exemplary embodiment of the present application, the applying of the first negative electrode active material layer composition includes applying and drying a first negative electrode slurry including a first negative electrode active material layer composition and a negative electrode slurry solvent.

In this case, a solid content of the first negative electrode slurry may fall within a range of 10% to 40%.

In an exemplary embodiment of the present application, the step of forming the first negative electrode active material layer may include steps of mixing the first negative electrode slurry; and coating the mixed first negative electrode slurry on one surface or both surfaces of the negative electrode current collector layer through a coater, and the coating may be performed using a coating method that is commonly used in the art.

An exemplary embodiment of the present application includes forming a step of a second negative electrode active material layer by applying a second negative electrode active material layer composition to a surface of the first negative electrode active material layer opposite to a surface in contact with the negative electrode current collector layer through a coater.

That is, this step is a step of forming a second negative electrode active material layer on the first negative electrode active material layer, and may mean a step of forming an active material layer on a surface (upper layer part), which is apart from the negative electrode current collector layer, of the double layer structure.

In an exemplary embodiment of the present application, the applying the second negative electrode active material layer composition includes applying and drying a second negative electrode slurry including a second negative electrode active material layer composition and a negative electrode slurry solvent.

In this case, a solid content of the second negative electrode slurry may fall within a range of 10% to 40%.

In an exemplary embodiment of the present application, there is provided the method for manufacturing a negative electrode for a lithium secondary battery in which the step of forming of the second negative electrode active material layer may include steps of mixing the second negative electrode slurry, and coating the mixed second negative electrode slurry on a surface opposite to a surface of the first negative electrode active material layer in contact with the negative electrode current collector layer.

The coating may be performed using a coating method that is commonly used in the art.

The description of the step of forming the first negative electrode active material layer may be applied to the step of forming the second negative electrode active material layer.

In an exemplary embodiment of the present application, there is provided the method for manufacturing a negative electrode for a lithium secondary battery in which the step of forming the second negative electrode active material layer on the first negative electrode active material layer may include a wet on dry process, or a wet on wet process.

In an exemplary embodiment of the present application, the wet-on-dry process may refer to a process of applying the first negative electrode active material layer composition, drying the composition partially or completely, and applying the second negative electrode active material layer composition on top of the composition.

FIG. 4 is a flowchart showing a wet on dry process according to an exemplary embodiment of the present application. Specifically, in the wet-on-dry process, a first negative electrode slurry mixture (first negative electrode active material, first negative electrode conductive material, first negative electrode binder, first solvent) is prepared and applied to the negative electrode current collector layer. Thereafter, the first negative electrode slurry mixture is dried to form a first negative electrode active material layer. Thereafter, a second negative electrode slurry mixture is prepared, applied to the first negative electrode active material layer, and dried to form a second negative electrode active material layer. Thereafter, each layer may be rolled and pressed to form a negative electrode for a lithium secondary battery according to the present application.

In an exemplary embodiment of the present application, the wet-on-wet process refers to a process of applying the first negative electrode active material layer composition and applying the second negative electrode active material layer composition on top of the first negative electrode active material layer composition without drying the same.

FIG. 5 is a flowchart showing a wet-on-wet process according to an exemplary embodiment of the present application. Specifically, in the wet-on-wet process, a first negative electrode slurry mixture is prepared and applied to a negative electrode current collector layer, and at the same time, a second negative electrode slurry mixture is prepared and applied to the first negative electrode slurry mixture, and then, the first and second negative electrode slurry mixtures are dried. Thereafter, each layer may be rolled and pressed to form a negative electrode for a lithium secondary battery according to the present application.

Thereafter, the negative electrode formed according to the wet on dry process or wet on wet process may be slit twice using a single coating die.

In particular, the wet-on-dry process is to apply the first negative electrode active material layer composition, to completely dry the composition, and then to apply the second negative electrode active material layer composition thereon, making it possible for the first negative electrode active material layer and the second negative electrode active material layer to have a clear boundary through the processes as described above. Accordingly, the compositions included in the first negative electrode active material layer and the second negative electrode active material layer are not mixed, making it possible to configure a double layer.

In an exemplary embodiment of the present application, the negative electrode slurry solvent can be used without limitation as long as it can dissolve the first negative electrode active material layer composition and the second negative electrode active material layer composition, and specifically, water or NMP can be used.

As a result of the wet-on-wet process described above, a bonding region in which the first negative electrode active material layer and the second negative electrode active material layer are mixed may be formed. In this case, in order for the wet-on-wet process to occur, the viscosity of the first negative electrode active material layer composition should be lower than the viscosity of the second negative electrode active material layer composition such that inter-mixing occurs in the bonding region and the process.

In the present application, after the first negative electrode active material layer is dried (wet-on-dry process), the second negative electrode active material layer is formed, so that an interface between the two layers is clearly divided. In addition, when the second negative electrode active material layer is applied in a state in which the first negative electrode active material layer composition is not completely dried (the first negative electrode active material layer composition and the second negative electrode active material layer composition are applied simultaneously), mixing occurs at an interface of the two layers, forming a bonding region.

In an exemplary embodiment of the present application, there is provided the method for manufacturing a negative electrode for a lithium secondary battery, the method including the step of pre-lithiating a negative electrode in which the first negative electrode active material layer and the second negative electrode active material layer are formed on the negative electrode current collector layer, wherein the step of pre-lithiating the negative electrode includes a lithium electroplating process, a lithium metal transfer process, a lithium metal deposition process, or a stabilized lithium metal powder (SLMP) coating process.

As described above, the second negative electrode active material layer contains the above-described second negative electrode active material and has a mixed composition of a silicon-based active material and a carbon-based active material, so that the advantage of rapid charging can be taken as it is. Especially, the second negative electrode active material has a mixed composition, and thus, is highly irreversible, which is advantageous even in the pre-lithiation process of precharging the negative electrode. As compared with a case in which only a first negative electrode active material layer is simply applied, the second negative electrode active material layer has the second negative electrode active material having the above composition, enabling a uniform pre-lithiation process on top of the negative electrode and thus improving the life.

An exemplary embodiment of the present application provides a lithium secondary battery including a positive electrode; the negative electrode for a lithium secondary battery according to the present application; a separator provided between the positive electrode and the negative electrode; and an electrolyte.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector layer and a positive electrode active material layer formed on the positive electrode current collector layer and including a positive electrode active material.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

Mode for Invention

**<Preparation Examples>**

**<Preparation of Negative Electrode>**

**<u>Example 1: Preparation of Negative Electrode</u>**

**Preparation of First Negative Electrode Active**

**Material Layer**

A first negative electrode active material layer composition was prepared using Si (average particle diameter (D50): 5 μm) as a silicon-based active material, a first conductive material, a second conductive material, a third conductive material, and polyacrylamide as a binder in a weight ratio of 70:9.8:10:0.2:10. A first negative electrode slurry (solid concentration: 25 wt%) was prepared by adding the composition to distilled water as a solvent for formation of a negative electrode slurry.

The first conductive material was carbon black C (specific surface area: 58 $m^2/g$, diameter: 37 nm), and the second conductive material was plate-like graphite (specific surface area: 17 $m^2/g$, average particle diameter (D50): 3.5 um), and the third conductive material was carbon nanotubes.

As a mixing method, the first conductive material, the second conductive material, the third conductive material, the binder, and water were dispersed using a homo mixer at 2,500 rpm for 30 minutes, and then the active material was added and dispersed at 2,500 rpm for 30 minutes, resulting in production of a first negative electrode slurry.

The first negative electrode slurry was coated on both surfaces of a copper current collector (thickness: 8 $\mu$m) serving as a negative electrode current collector with a loading amount of 2.75 mg/cm$^2$, which was then roll-pressed and dried in a vacuum oven at 130°C for 10 hours to form a first negative electrode active material layer (thickness: 33 $\mu$m).

**Preparation of Second Negative Electrode Active Material Layer**

A second negative electrode active material layer composition was prepared using Si/C (average particle diameter (D50): 3.5 $\mu$m, crystal grain size 200 nm) as a silicon-based active material, a second conductive material, a third conductive material, and polyacrylamide as a binder in a weight ratio of 70:19.8:0.2:10. A second negative electrode slurry was prepared by adding the composition to distilled water as a solvent for formation of a negative electrode slurry (solid concentration: 25 wt%).

The second conductive material was plate-like graphite (specific surface area: 17 m$^2$/g, average particle diameter (D50): 3.5 $\mu$m), and the third conductive material was carbon nanotubes.

As a mixing method, the second and third conductive materials, the binder, and water were dispersed using a homo mixer at 2,500 rpm for 30 minutes, and then the active material was added and dispersed at 2,500 rpm for 30 minutes, resulting in production of a second negative electrode slurry.

The second negative electrode slurry was coated on the first negative electrode active material layer with a loading amount of 1 mg/cm$^2$, which was then roll-pressed and dried in a vacuum oven at 130°C for 10 hours to form a second negative electrode active material layer (thickness: 15 $\mu$m).

Negative electrode active material layers were prepared in the same manner as in Example 1, except that conditions were changed as shown in Table 1 below.

[Table 1]

| | First negative electrode active material layer | | Second negative electrode active material layer | | Remarks |
|---|---|---|---|---|---|
| | Negative electrode active material | D50 ($\mu$m) | Negative electrode active material | Crystal grain size (nm) | |
| Example 1 | Si | 5 | Si/C | 200 | DL structure |
| Example 2 | Si | 5 | SiO | 200 | DL structure |
| Example 3 | Si | 5 | Si | 200 | DL structure |
| Example 4 | Si | 5 | Si/C | 3 | DL structure |
| Example 5 | Si | 5 | Si/C | 220 | DL structure |
| Comparative Example 1 | Si | 5 | - | - | SL structure (total thickness of negative electrode active material layer: 50 $\mu$m) (crystal grain size 200 nm) |
| Comparative Example 2 | Si | 5 | Si/C | 400 | DL structure |
| Comparative Example 3 | Si | 5 | Si/C | 350 | DL structure |
| Comparative Example 4 | Si | 5 | SiO | 400 | DL structure |
| Comparative Example 5 | Si | 5 | Si | 400 | DL structure |

**Experimental Example 1: Evaluation of Life Characteristics**

For the secondary batteries including the negative electrodes manufactured in the Examples and Comparative Examples, the life and capacity retention rate were evaluated using an electrochemical charging and discharging device.

The secondary battery was subjected to a cycle test at 4.2-3.0 V 1C/0.5C, and the capacity retention rate was measured by performing charging/discharging at 0.33C/0.33C (4.2-3.0 V) every 50 cycles during the test.

Capacity retention rate (%) = {(discharge capacity at $N^{th}$ cycle)/(discharge capacity at first cycle)} X 100

## Experimental Example 2: Evaluation of Resistance Increase Rate Measurement

In the test in Experimental Example 1, the capacity retention rates were measured by charging/discharging (4.2-3.0V) the batteries at 0.33C/0.33C every 50 cycles, and then the resistance increase rates were compared and analyzed by discharging the batteries with a pulse of 2.5C at SOC50 to measure the resistance.

In addition, for the life characteristic evaluation and the resistance increase rate measurement evaluation, data was calculated at 200 cycles, respectively, and the results are shown in Table 2 below.

[Table 2]

|  | Capacity retention rate evaluation (%, @200 cycles) | Resistance increase rate (%, @200 cycles) |
|---|---|---|
| Example 1 | 90.3 | 0.75 |
| Example 2 | 90 | 1.2 |
| Example 3 | 88 | 2.3 |
| Example 4 | 92 | 1.5 |
| Example 5 | 90.7 | 0.7 |
| Comparative Example 1 | 77 | 23.4 |
| Comparative Example 2 | 85 | 3.8 |
| Comparative Example 3 | 85.7 | 5.2 |
| Comparative Example 4 | 84.8 | 4.5 |
| Comparative Example 5 | 83.6 | 6.3 |

As can be seen in Table 2 above, in the case of the negative electrode according to the present application, it was confirmed that the silicon-based active material with a crystal grain size controlled as described above is used in the second negative electrode active material layer, thereby enabling the crystal grain boundaries to be widely distributed, allowing lithium ions to be more uniformly distributed upon intercalation, which reduces the stress generated during intercalation of lithium ions into silicon particles and alleviates particle breakage on the surface, resulting in further improvement of the life stability of the negative electrode.

Comparative Example 1 corresponds to a single layer (SL) structure having a single layer of silicon-based negative electrode active material layer, and Comparative Examples 2 to 5 all correspond to a case in which a DL structure is provided as in the present invention, but the crystal grain size deviates from the range of the present application.

In such cases, it was confirmed that the crystal grain size in the second negative electrode active material layer was large, so that reaction concentration occurred on the surface, and particle breakage occurred on the surface of the second negative electrode active material layer, thereby degrading the life stability and forming the high resistance increase rate. In particular, it was confirmed that the reaction was more concentrated on the surface, resulting in a higher resistance increase rate, compared with the SL structure.

## Claims

1.    A negative electrode for a lithium secondary battery, the negative electrode comprising:

a negative electrode current collector layer;
a first negative electrode active material layer provided on one surface or both surfaces of the negative electrode current collector layer; and
a second negative electrode active material layer provided on a surface of the first negative electrode active material layer opposite to a surface facing the negative electrode current collector layer, wherein
the first negative electrode active material layer comprises a first negative electrode active material layer composition comprising a first negative electrode active material, and the second negative electrode active material layer comprises a second negative electrode active material layer composition comprising a second negative electrode active material,

the first negative electrode active material comprises one or more selected from the group consisting of Si and SiOx (0 < x < 2), and comprises 95 parts by weight or more of Si based on 100 parts by weight of the first negative electrode active material, the second negative electrode active material comprises a silicon-based active material, and

the silicon-based active material has a crystal grain size of 250 nm or less.

2. The negative electrode for a lithium secondary battery of claim 1, wherein the first negative electrode active material is included in an amount of 80 parts by weight or more based on 100 parts by weight of the first negative electrode active material layer composition.

3. The negative electrode for a lithium secondary battery of claim 1, wherein a thickness of the first negative electrode active material layer is 10 $\mu$m or more and 25 $\mu$m or less.

4. The negative electrode for a lithium secondary battery of claim 1, wherein the silicon-based active material comprises one or more selected from the group consisting of Si, $SiO_x$ (0 < x < 2), SiC, and a Si alloy.

5. The negative electrode for a lithium secondary battery of claim 1, wherein the silicon-based active material comprises Si.

6. The negative electrode for a lithium secondary battery of claim 1, wherein a central particle diameter (D50) of the silicon-based active material is 1 $\mu$m or more and 10 $\mu$m or less.

7. The negative electrode for a lithium secondary battery of claim 1, wherein a thickness of the second negative electrode active material layer is 10 $\mu$m or more and 20 $\mu$m or less.

8. The negative electrode for a lithium secondary battery of claim 1, wherein a porosity of the first negative electrode active material layer and a porosity of the second negative electrode active material layer are 20% or more and 50% or less, respectively.

9. The negative electrode for a lithium secondary battery of claim 1, wherein

the first negative electrode active material layer composition has a shear viscosity of 2,000 cPs or higher and 15,000 cPs or less at a shear rate of 2.5 (1/s), and
a viscosity of the second negative electrode active material layer composition is lower than the viscosity of the first negative electrode active material layer composition.

10. A lithium secondary battery comprising:

a positive electrode;
the negative electrode for a lithium secondary battery of any one of claims 1 to 9;
a separator provided between the positive electrode and the negative electrode; and
an electrolyte.

11. A method for manufacturing a lithium secondary battery, the method comprising:

preparing a negative electrode for a lithium secondary battery; and
assembling the negative electrode for a lithium secondary battery, a positive electrode, a separator, and an electrolyte, wherein
the preparing the negative electrode for a lithium secondary battery comprises preparing a negative electrode current collector layer, applying a first negative electrode active material layer composition to one surface or both surfaces of the negative electrode current collector layer to form a first negative electrode active material layer, and
the first negative electrode active material layer comprises a first negative electrode active material layer composition comprising a first negative electrode active material, and the second negative electrode active material layer comprises a second negative electrode active material layer composition comprising a second negative electrode active material,
the first negative electrode active material comprises one or more selected from the group consisting of Si and SiO$_x$ where $0 < x < 2$, and comprises 95 parts by weight or more of Si based on 100 parts by weight of the first negative electrode active material,
the second negative electrode active material comprises a silicon-based active material, and
the silicon-based active material has a crystal grain size of 250 nm or less.

12. The method of claim 11, comprising pre-lithiating a negative electrode having the first negative electrode active material layer and second negative electrode active material layer formed on the negative electrode current collector layer,
wherein the pre-lithiating the negative electrode comprises a lithium electroplating process, a lithium metal transfer process, a lithium metal deposition process, or a stabilized lithium metal powder (SLMP) coating process.

13. The method of claim 11, wherein

the forming the second negative electrode active material layer on the first negative electrode active material layer comprises a wet-on-dry process, and
the wet-on-dry process comprises:

applying the first negative electrode active material layer composition;
forming the first negative electrode active material layer by drying partially or completely the applied first negative electrode active material layer composition; and
applying the second negative electrode active material layer composition to the first negative electrode active material layer.

14. The method of claim 11, wherein

the forming the second negative electrode active material layer on the first negative electrode active material layer comprises a wet-on-wet process, and
the wet-on-wet process comprises:

applying the first negative electrode active material layer composition; and
applying the second negative electrode active material layer composition to the first negative electrode active material layer composition in an undried state of the first negative electrode active material layer composition.

[Figure 1]

[Figure 2]

[Figure 3]

```
┌────────────────────────────────────────────────────────┐
│   Prepare first anode slurry mixture (active material/   │
│            conductive agent/binder/solvent)              │
└────────────────────────────────────────────────────────┘
                          ↓
┌────────────────────────────────────────────────────────┐
│        Apply first anode slurry mixture to collector     │
└────────────────────────────────────────────────────────┘
                          ↓
┌────────────────────────────────────────────────────────┐
│   Drying the first anode slurry mixture to form the      │
│                      first layer                         │
└────────────────────────────────────────────────────────┘
                          ↓
┌────────────────────────────────────────────────────────┐
│           Prepare second anode slurry mixture            │
└────────────────────────────────────────────────────────┘
                          ↓
┌────────────────────────────────────────────────────────┐
│     Apply the second anode slurry mixture on the first   │
│                          layer                           │
└────────────────────────────────────────────────────────┘
                          ↓
┌────────────────────────────────────────────────────────┐
│   Drying the second anode slurry mixture to form the     │
│                     second layer                         │
└────────────────────────────────────────────────────────┘
                          ↓
┌────────────────────────────────────────────────────────┐
│           Roll and press the negative electrode          │
└────────────────────────────────────────────────────────┘
                          ↓
┌────────────────────────────────────────────────────────┐
│   Slitting the negative electrode 2 times using single   │
│                      coating die                         │
└────────────────────────────────────────────────────────┘
```

[Figure 4]

```
┌─────────────────────────────────────────────────────┐
│ Prepare first anode slurry mixture (active material/ │
│            conductive agent/binder/solvent)          │
└─────────────────────────────────────────────────────┘
                          ↓
┌─────────────────────────────────────────────────────┐
│  Apply first anode slurry mixture to collector as    │
│                   the first layer                    │
└─────────────────────────────────────────────────────┘
                          ↓
┌─────────────────────────────────────────────────────┐
│           Prepare second anode slurry mixture        │
└─────────────────────────────────────────────────────┘
                          ↓
┌─────────────────────────────────────────────────────┐
│  Apply the second anode slurry mixture on the first  │
│                       layer                          │
└─────────────────────────────────────────────────────┘
                          ↓
┌─────────────────────────────────────────────────────┐
│ Drying the second anode slurry mixture to form the   │
│                    second layer                      │
└─────────────────────────────────────────────────────┘
                          ↓
┌─────────────────────────────────────────────────────┐
│            Roll and press the negative electrode     │
└─────────────────────────────────────────────────────┘
                          ↓
┌─────────────────────────────────────────────────────┐
│ Slitting the negative electrode 2 times using single │
│                    coating die                       │
└─────────────────────────────────────────────────────┘
```

[Figure 5]

## INTERNATIONAL SEARCH REPORT

| | International application No. |
|---|---|
| | **PCT/KR2025/099519** |

**A. CLASSIFICATION OF SUBJECT MATTER**

**H01M 4/134**(2010.01)i; **H01M 4/38**(2006.01)i; **H01M 4/1395**(2010.01)i; **H01M 4/04**(2006.01)i; **H01M 10/052**(2010.01)i; **H01M 10/058**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/134(2010.01); H01M 10/052(2010.01); H01M 10/0525(2010.01); H01M 4/13(2010.01); H01M 4/131(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제1음극 활물질층(first negative electrode active material layer), 제2음극 활물질층 (second negative electrode active material layer), 실리콘계 활물질(silicon-based active material), 음극(negative electrode), 리튬 이차전지(lithium secondary battery), 결정립 크기(crystal grain size)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2023-0120555 A (LG ENERGY SOLUTION, LTD.) 17 August 2023 (2023-08-17) See paragraphs [0058], [0104], [0105], [0134], [0135], [0154], [0155], [0157], [0164], [0167], [0194], [0195], [0218] and [0240]; and claims 1, 10 and 15. | 1-14 |
| Y | KR 10-2024-0009896 A (LG ENERGY SOLUTION, LTD.) 23 January 2024 (2024-01-23) See paragraph [0047]; and claim 1. | 1-14 |
| Y | KR 10-2023-0010172 A (LG ENERGY SOLUTION, LTD.) 18 January 2023 (2023-01-18) See paragraphs [0050], [0058], [0071], [0193] and [0214]-[225]; and claims 1, 11, 12 and 14-16. | 1-14 |
| A | KR 10-2023-0127948 A (SK ON CO., LTD.) 01 September 2023 (2023-09-01) See claims 1 and 11. | 1-14 |

☑ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **03 July 2025** | **04 July 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| | International application No. |
|---|---|
| | **PCT/KR2025/099519** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2220905 B1 (SAMSUNG SDI CO., LTD. et al.) 26 February 2021 (2021-02-26)<br>See claim 1. | 1-14 |
| A | KR 10-2011-0128739 A (SHIN-ETSU CHEMICAL CO., LTD.) 30 November 2011 (2011-11-30)<br>See claim 1. | 1-14 |

Form PCT/ISA/210 (second sheet) (July 2022)

## INTERNATIONAL SEARCH REPORT
### Information on patent family members

| International application No. |
|---|
| **PCT/KR2025/099519** |

| Patent document cited in search report | | | Publication date (day/month/year) | Patent family member(s) | | | Publication date (day/month/year) |
|---|---|---|---|---|---|---|---|
| KR | 10-2023-0120555 | A | 17 August 2023 | CN | 118104001 | A | 28 May 2024 |
| | | | | EP | 4393018 | A1 | 03 July 2024 |
| | | | | JP | 2024-534485 | A | 20 September 2024 |
| | | | | KR | 10-2698870 | B1 | 26 August 2024 |
| | | | | US | 2023-0253551 | A1 | 10 August 2023 |
| | | | | WO | 2023-153603 | A1 | 17 August 2023 |
| KR | 10-2024-0009896 | A | 23 January 2024 | CN | 118591905 | A | 03 September 2024 |
| | | | | EP | 4462505 | A1 | 13 November 2024 |
| | | | | JP | 2025-506415 | A | 11 March 2025 |
| | | | | KR | 10-2693645 | B1 | 12 August 2024 |
| | | | | WO | 2024-014897 | A1 | 18 January 2024 |
| KR | 10-2023-0010172 | A | 18 January 2023 | CN | 116745933 | A | 12 September 2023 |
| | | | | CN | 116918103 | A | 20 October 2023 |
| | | | | EP | 4287320 | A4 | 30 October 2024 |
| | | | | JP | 2024-505728 | A | 07 February 2024 |
| | | | | KR | 10-2023-0010171 | A | 18 January 2023 |
| | | | | KR | 10-2023-0010172 | A | 18 January 2023 |
| | | | | US | 2023-0021692 | A1 | 26 January 2023 |
| | | | | WO | 2023-282683 | A1 | 12 January 2023 |
| | | | | WO | 2023-282684 | A1 | 12 January 2023 |
| KR | 10-2023-0127948 | A | 01 September 2023 | CN | 115132969 | A | 30 September 2022 |
| | | | | EP | 4220752 | A3 | 09 August 2023 |
| | | | | KR | 10-2022-0133624 | A | 05 October 2022 |
| | | | | KR | 10-2570427 | B1 | 24 August 2023 |
| | | | | US | 2022-0310991 | A1 | 29 September 2022 |
| | | | | US | 2024-0405208 | A1 | 05 December 2024 |
| KR | 10-2220905 | B1 | 26 February 2021 | KR | 10-2018-0032986 | A | 02 April 2018 |
| | | | | US | 10490811 | B2 | 26 November 2019 |
| | | | | US | 2018-0090756 | A1 | 29 March 2018 |
| KR | 10-2011-0128739 | A | 30 November 2011 | CN | 102263242 | A | 30 November 2011 |
| | | | | JP | 5666378 | B2 | 12 February 2015 |
| | | | | KR | 10-1803568 | B1 | 30 November 2017 |
| | | | | US | 9537142 | B2 | 03 January 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240030609

- JP 2009080971 A